# EUROPEAN PATENT APPLICATION

(11) **EP 3 780 444 A1**
(43) Date of publication of application: **17.02.2021**
(21) Application number: 18913748.2
(22) Date of filing: 05.04.2018
(51) Int. Cl.: H04L 1/08, H04W 28/06, H04W 72/04

(54) **TRANSMISSION DEVICE AND RECEPTION DEVICE**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/014643
(87) International publication number: WO 2019/193732

(57) **Abstract**

A transmitting apparatus includes a transmitting section that transmits a physical shared channel for which data mapping type B and a plurality of repetitions are configured, and a control section that performs control to perform the plurality of repetitions in one slot in a case that a time resource of the physical shared channel satisfies a certain condition.

## Description

### Technical Field

The present invention relates to a transmitting apparatus and a receiving apparatus in next-generation mobile communication systems.

### Background Art

For UMTS (Universal Mobile Telecommunications System) networks, the specifications of Long Term Evolution (LTE) have been drafted for the purpose of further increasing high speed data rates, providing lower latency, and so on (see Non-Patent Literature 1). For the purpose of further high capacity and advancement of LTE (LTE Rel. 8, Rel. 9) and so on, the specifications of LTE-A (LTE-Advanced, LTE Rel. 10, Rel. 11, Rel. 12, Rel. 13) have been drafted.

Successor systems of LTE (referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 14," "LTE Rel. 15" (or later versions), and so on) are also under study.

In existing LTE systems (for example, LTE Rel. 8 to Rel. 13), downlink (DL) and/or uplink (UL) communications are carried out using 1 ms subframes (referred to as, for example, "transmission time intervals (TTIs)"). This subframe is the unit of time to transmit one data packet that is channel-encoded, and is the unit of processing in scheduling, link adaptation, retransmission control (HARQ (Hybrid Automatic Repeat reQuest), and so on.

A radio base station (for example, eNB (eNode B)) controls allocation (scheduling) of data to a user terminal (UE (User Equipment)) and reports scheduling indication of data to the UE by using downlink control information (DCI). For example, when a UE conforming to the existing LTE (for example, LTE Rel. 8 to Rel. 13) receives DCI (also referred to as a "UL grant") indicating UL transmission, the UE performs transmission of UL data in a subframe a certain period (for example, 4 ms) after the repetition.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is studied, for future radio communication systems (for example, NR) to control scheduling of data in the unit of a certain period (for example, a slot). Alternatively, it is also studied to control scheduling of data in the unit of one or more symbols (also referred to as, for example, a "mini-slot," a "sub-slot") included in a slot.

Moreover, for NR, it is also studied to perform repetitive transmissions (repetitions) in scheduling in the unit of a slot (slot based scheduling, data mapping type A) and/or scheduling in the unit of a mini-slot (mini-slot based scheduling, data mapping type B).

For example, by employing mini-slot based scheduling, it is considered to perform repetitions (mini-slot repetitions) of data and the like in a certain period. However, it is not sufficiently studied how to control repetitions of data (for example, allocation of time resources to use for each transmission and the like). If repetitions are not performed appropriately, deterioration in communication throughput and/or communication quality may occur.

In view of the above, one object of the present disclosure is to provide a transmitting apparatus and a receiving apparatus that can appropriately perform repetitions.

### Solution to Problem

A transmitting apparatus according to one aspect of the present invention includes a transmitting section that transmits a physical shared channel for which data mapping type B and a plurality of repetitions are configured, and a control section that performs control to perform the plurality of repetitions in one slot in a case that a time resource of the physical shared channel satisfies a certain condition.

### Advantageous Effects of Invention

According to the present invention, it is possible to appropriately perform repetitions.

### Brief Description of Drawings

FIG. 1 is a diagram to show an example of a mini-slot aggregation mechanism;
FIG. 2 is a diagram to show an example of repetition control according to a first aspect;
FIG. 3 is a diagram to show an example of repetition control in option 2-1;
FIG. 4 is a diagram to show an example of repetition control in option 2-2;
FIG. 5 is a diagram to show an example of mini-slot aggregation according to a third aspect;
FIG. 6 is a diagram to show an example of slot aggregation mechanism according to the third aspect;
FIG. 7 is a diagram to show an example of a schematic structure of a radio communication system according to one embodiment of the present invention;
FIG. 8 is a diagram to show an example of an overall structure of a radio base station according to one embodiment of the present invention;
FIG. 9 is a diagram to show an example of a functional structure of the radio base station according to one embodiment of the present invention;
FIG. 10 is a diagram to show an example of an overall structure of a user terminal according to one embodiment of the present invention;
FIG. 11 is a diagram to show an example of a functional structure of the user terminal according to one embodiment of the present invention; and
FIG. 12 is a diagram to show an example of a hardware structure of the radio base station and the user terminal according to one embodiment of the present invention.

### Description of Embodiments

### <Slot Based Scheduling and Mini-slot Based Scheduling>

For future radio communication systems (for example, LTE Rel. 14, Rel. 15 or later versions, 5G, NR and the like, also referred to as "NR" below), it is studied to perform transmission of data and the like employing slot based scheduling and mini-slot based scheduling.

A slot is one of basic transmission units, and one slot is constituted of a certain number of symbols. For example, a slot period is constituted of a first number of symbols (for example, 14 symbols) in a normal CP, and a slot period is constituted of a second number of symbols (for example, 12 symbols) in an extended CP.

A mini-slot corresponds to a period constituted of the number of symbols up to a certain value (for example, 14 symbols (or 12 symbols)). As an example, in DL transmission (for example, PDSCH transmission), a mini-slot may be constituted of a certain number of symbols (for example, two, four, or seven symbols).

It may be configured so that different resource allocation methods are used for slot based scheduling (PDSCH mapping type A) and mini-slot based scheduling (PDSCH mapping type B).

Assume a case where slot based scheduling (also referred to as "PDSCH mapping type A") is employed in DL (for example, PDSCH transmission). In this case, a starting position of the PDSCH in a slot is selected from symbol candidates configured in advance, and the number of symbols to which the PDSCH is to be mapped (PDSCH length) is selected from a range from a certain value (X) to 14. The symbol candidates serving as candidates for the starting position correspond, for example, to certain symbol indices (for example, #0, #1, #2, and #3) in the slot. X is, for example, 3.

Assume a case where mini-slot based scheduling (also referred to as "PDSCH mapping type B") is employed in DL (for example, PDSCH transmission). In this case, the number of symbols to which the PDSCH is to be mapped (PDSCH length) is selected from the candidate numbers of symbols configured in advance, and the starting position of the PDSCH in a slot is configured at any of the positions (symbols) in the slot. The candidate numbers of symbols for the PDSCH length correspond, for example, to certain numbers (two, four, and seven symbols). In other words, the starting position of the PDSCH is configured flexibly.

Assume a case where slot based scheduling (also referred to as "PUSCH mapping type A") is employed in UL (for example, PUSCH transmission). In this case, a starting position of the PUSCH in a slot is selected from candidate symbols configured in advance (for example, certain symbol index #0), and the number of symbols to which the PUSCH is to be mapped (PUSCH length) is selected from a range from a certain value (Y) to 14. Y is, for example, 4.

Assume a case where mini-slot based scheduling (also referred to as "PUSCH mapping type B") is employed in UL (for example, PUSCH transmission). In this case, the number of symbols to which the PUSCH is to be mapped (PUSCH length) is selected from the candidate numbers of symbols configured in advance (1 to 14 symbols), and the starting position of the PUSCH in a slot is configured at any of the positions (symbols) in the slot. In other words, the starting position of the PDSCH is configured flexibly.

As described above, mini-slot based scheduling may be for PDSCH and/or PUSCH transmission which is constituted of two, four, or seven symbols and for which a starting symbol position can be configured flexibly. In contrast, a PDSCH for which mini-slot based scheduling is not employed may be a PDSCH having a starting symbol position at any of 0-th to third symbols in a slot and having a symbol length equal to or greater than a certain symbol length. A PUSCH for which mini-slot based scheduling is not employed may be a PUSCH having a starting symbol position at 0-th symbol in a slot and having a symbol length equal to or greater than a certain symbol length.

A PDSCH and a PUSCH for which mini-slot based scheduling is not employed may be referred to as "PDSCH/PUSCH mapping type A," and a PDSCH and a PUSCH for which mini-slot based scheduling is employed may be referred to as "PDSCH/PUSCH mapping type B." A DMRS may be inserted into a different position depending on the mapping type of PDSCH/PUSCH. Furthermore, whether a PDSCH/PUSCH is of one or the other mapping type may be configured by higher layer signaling (for example, RRC signaling), may be reported using DCI, or may be recognized based on a combination of both.

PDSCH mapping type A and PUSCH mapping type A may be referred to as "data mapping type A." PDSCH mapping type B and PUSCH mapping type B may be referred to as "data mapping type B."

For NR, it is studied to employ repetitions for data transmission. For example, a base station (a network (NW) or a gNB) repeatedly performs transmission of DL data (for example, a downlink shared channel (PDSCH)) a certain number of times. Alternatively, a UE repeatedly performs UL data (for example, an uplink shared channel (PUSCH)) a certain number of times.

In a case of employing slot based scheduling, it is considered to map data to each slot over a plurality of slots to perform repetitions (inter-slot repetitions). In slot based scheduling, since data mapping is controlled on a per-slot basis (in each slot), it is not configured so that data is mapped to cross a slot-boundary.

In contrast, in a case of employing mini-slot based scheduling, data is repeatedly transmitted in the unit of a certain number of symbols. Hence, it is considered that one transmission (data mapping) among a plurality of repetitions (data mapping) may cross a slot-boundary in some cases depending on the number of repetition times (for example, K, repK, repetition factor, or the like), the unit of data allocation(data length of each repetition), a period to which repetition is performed, and the like.

### <Dynamic Grant Transmission and Configured Grant Transmission (Type 1, Type 2)>

For NR, for the purpose of achieving communication with low latency, it is studied to employ configured grant-based transmission (CG transmission), in which UL data is transmitted based on a UL grant configured by a higher layer (for example, a configured grant or a configured UL grant), in addition to dynamic grant-based transmission (DG transmission), in which a UL signal (for example, a PUSCH) is transmitted based on a dynamic UL grant (dynamic grant). The dynamic grant and the configured grant may each be referred to as an "actual UL grant."

DG transmission may be referred to as a "DG (dynamic grant-based) PUSCH (Physical Uplink Shared Channel)," a "UL transmission with dynamic grant," a "PUSCH with dynamic grant," "UL transmission with UL grant," "UL grant-based transmission," and "UL transmission scheduled (for which a transmission resource is configured) by dynamic grant."

CG transmission may be referred to as a "CG (configured grant-based) PUSCH," "UL transmission with configured grant," a "PUSCH with configured grant," "UL transmission without UL grant," "UL grant-free transmission," and "UL transmission scheduled by configured grant (configured with a transmission resource)." CG transmission may be defined as a kind of UL semi-persistent scheduling (SPS).

Several types (type 1, type 2, and the like) of CG transmission control are studied.

In CG type 1 transmission, a parameter to be used for CG transmission (which may be referred to as a "CG transmission parameter," a "CG parameter," and the like) is configured for the UE only by using higher layer signaling. The CG parameter may include, for example, information specifying a CG resource. The CG parameter may include, for example, a periodicity. Even in a case that CG transmission is configured, the UE may skip the CG transmission if there is no data in a transmission buffer.

In CG type 2 transmission, a parameter to be used for CG transmission is configured for the UE by using higher layer signaling. The CG parameter may include, for example, a periodicity. Similarly to SPS in existing LTE, the UE can determine whether to perform transmission using resources for CG transmission (which may be referred to as "CG resources" and the like), based on a certain activation/deactivation signal. Even in a case that CG transmission is activated, the UE may skip the CG transmission if there is no data in a transmission buffer. DCI (activation signaling) may activate (trigger) a PUSCH configured by SPS (Semi-Persistent Scheduling), and DCI (deactivation signaling) or an elapse of a certain time period (timer) may release (deactivate) the PUSCH.

In DL or UL transmission based on GB transmission, transmission in a plurality of slots or mini-slots may be TB repetitions. The repetitions may be performed in accordance with a RV (Redundancy Version) sequence.

### <Slot Aggregation and Mini-slot Aggregation>

Slot aggregation (which may be referred to as "slot bundling"), in which aggregation (which may be referred to as "bundling") of a plurality of slots is performed, is studied. Mini-slot aggregation (which may be referred to as "mini-slot bundling"), in which aggregation of a plurality of mini-slots is performed, is studied. Slot aggregation and mini-slot aggregation may individually be referred to in two types.

The following mini-slot aggregation mechanism is also studied.

The mini-slot aggregation mechanism performs resource allocation for TB repetitions in one slot.

In a case of slot based repetitions, a timing offset for the first TB transmission is determined based on a joint indication indicating the starting symbol and the length of the TB transmission (for example, a SLIV (Start and Length Indicator Value)). Resources for repetition and/or aggregation are allocated so as to be subsequent to the first TB transmission and have the same time length, that is, allocated consecutively.

In a case that a repetition in one slot crosses a slot-boundary, the repetition may be postponed to the first effective symbols that can be used for TB transmission in the next slot. For example, in the case of PUSCH transmission, effective symbols that can be used for TB transmission are UL symbols that are consecutive over a PUSCH length or more.

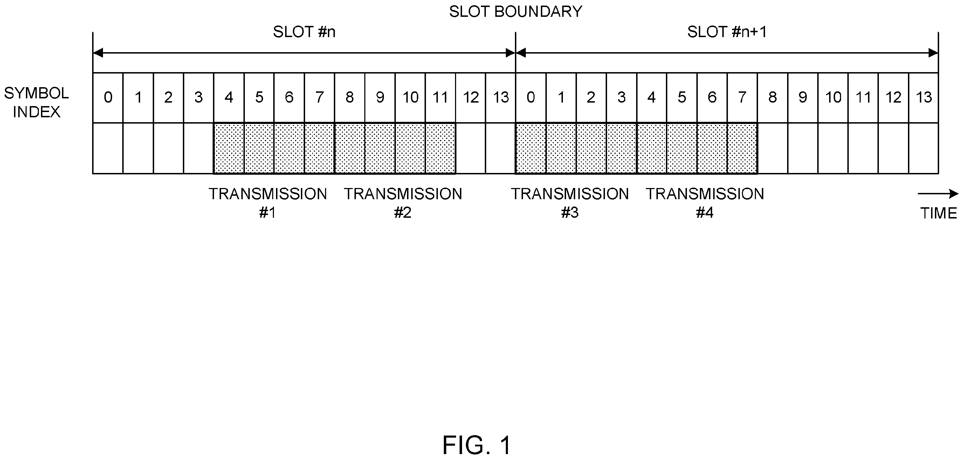

In the example in FIG. 1, the number of repetition times K is configured at 4, and a PUSCH starting from symbol #4 and having a length of four symbols is scheduled.

The UE maps PUSCH transmission #1 (transmission #1) to symbols #4 to #7 in slot #n. Furthermore, the UE maps PUSCH transmission #2 (transmission #2) to symbols #8 to #11 subsequent to PUSCH transmission #1. Since the PUSCH transmission subsequent to PUSCH transmission #2 cannot be mapped in slot #n (otherwise, the PUSCH transmission results in crossing the slot-boundary), the UE postpones PUSCH transmission #3 (transmission #3) to next slot #n+1 to map PUSCH transmission #3 to mappable symbols #0 to #3. Furthermore, the UE maps PUSCH transmission #4 (transmission #4) to symbols #4 to #7 subsequent to PUSCH transmission #3. In this way, the mini-slot aggregation mechanism can map a plurality of PUSCH transmissions in one slot.

It is studied, in a case that slot aggregation is configured for the UE, to use the same symbol allocation over a plurality of UL slots to repeatedly perform TB over the plurality of slots. In a case that slot aggregation is configured, the configuration may be limited only to rank 1 (single layer) for both DL and UL.

### <Problem in Slot Aggregation and Mini-slot Aggregation>

However, it is not determined what slot aggregation and mini-slot aggregation are and what relation holds between slot aggregation and mini-slot aggregation and data mapping type A, and data mapping type B. For this reason, it is not determined what kind of repetition structure is to be employed in a case that data mapping is of type A or type B.

In view of the above, the inventors of the present invention studied a method of repetitions for each data mapping type and reached the present invention.

Embodiments according to the present invention will be described in detail with reference to the drawings as follows. The radio communication method according to each embodiment may be employed independently or may be employed in combination.

Note that, in the following embodiments, any signal and channel may be interpreted as those with the prefix "NR-," which indicates that the signal and channel are for NR. Although repetitions of UL data (a PUSCH) in UL are given as an example in the following description, the embodiments are similarly applicable to repetitions of DL data (a PDSCH) in DL. The following embodiments may also be applied to repetitions of a signal and/or a channel other than data.

In the following description, each of a NW that transmits DL data in DL and/or a UE that transmits UL data in UL may be interpreted as a "transmitting apparatus." Each of a NW that receives UL data in UL and/or a UE that receives DL data in DL may be interpreted as a "receiving apparatus."

### (First Aspect)

In a first aspect, repetitions of data mapping type A use the slot aggregation mechanism.

The slot aggregation may be configured for the UE. The UE may determine whether to use the slot aggregation mechanism, based on data mapping type.

Requirements of slot aggregation may include at least one of to use the same symbol allocation over a plurality of slots, to perform one TB transmission per slot, and that one TB transmission does not cross a slot-boundary.

When a certain condition is satisfied, slot aggregation may be employed. For example, the certain condition may be that data mapping type A is configured and that K > 1 is configured. Slot aggregation may perform the same symbol allocation (the same starting symbol and the same length) over K consecutive slots. Transmission using the slot aggregation may be limited to single transmission layer.

For example, in a case that PUSCH mapping type A is configured for PUSCH transmission of CG type 1 or CG type 2 and that K > 1 is configured, for the UE, the UE performs the same symbol allocation (the same starting symbol and the same length) over K consecutive slots. The PUSCH is limited to single transmission layer. The UE repeatedly transmits a TB over the K consecutive slots in each of which the same symbol allocation is performed.

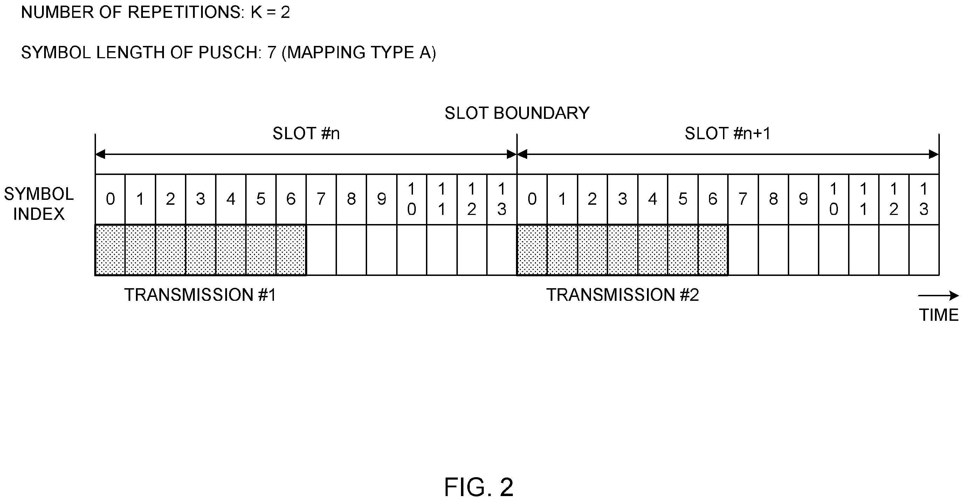

In the example in FIG. 2, the number of repetition times K is configured at 2, PUSCH mapping type A is configured, and the length of the PUSCH is configured at seven. In accordance with PUSCH mapping type A, the start of the PUSCH is symbol #0.

The UE maps PUSCH transmission #1 (transmission #1) to symbols #0 to #6 in slot #n. Furthermore, to follow the slot aggregation mechanism, the UE maps, in slot #n+1, PUSCH transmission #2 (transmission #2) to symbols #0 to #6 which are the same as those for the PUSCH transmission in slot #n. The NW also determines resources for repetitions similarly to the UE, and receives the repetitions.

According to the first aspect, the UE and/or the NW that performs TB transmission can perform slot aggregation of TB transmissions in data mapping type A and repetitions. The UE and/or the NW that performs TB reception can recognize slot aggregation and repetitions and hence receive TBs correctly.

### (Second Aspect)

In a second aspect, repetitions of data mapping type B use the slot aggregation mechanism and/or a mini-slot aggregation mechanism under a certain condition.

Slot aggregation and/or mini-slot aggregation may be configured for the UE. The UE may determine whether to use the slot aggregation mechanism and/or the mini-slot aggregation mechanism, based at least on data mapping type.

Requirements of mini-slot aggregation may include at least one of to perform more than one TB transmission per slot, that a plurality of TB transmissions in one slot are consecutive, and that one TB transmission does not cross a slot-boundary.

In a case of employing mini-slot aggregation, repetitions may complete in one slot.

At least one of options 2-1, 2-2, and 2-3 below may be used.

### <Option 2-1>

Repetitions in data mapping type B use the slot aggregation mechanism under a certain condition.

The certain condition may be to satisfy at least one of conditions 2-1-1, 2-1-2, and 2-1-3 below.

### (Condition 2-1-1)

The length of one data (TB) transmission period is seven symbols (1/2 slot) or more. Note that condition 2-1-1 may be that the length of one data transmission period is longer than seven symbols (1/2 slot).

### (Condition 2-1-2)

A semi-statistic DL/UL configuration allows only slot-aggregation between slot aggregation and mini-slot aggregation for repetitions of data scheduled in accordance with data mapping type B.

Here, a "semi-static DL/UL configuration allows only slot aggregation" may be interpreted as "scheduled TB transmission cannot be repeatedly performed in a slot in a case of employing the semi-statistic DL/UL configuration" and "scheduled TB transmission can be performed only once by using UL symbols based on the semi-statistic DL/UL configuration."

Note that condition 2-1-2 may include that only slot aggregation is possible for repetitions of data scheduled in accordance with data mapping type B, or this may be defined as another condition. This condition may be interpreted as "there are no sufficient symbols, after TB transmission, for repetitions of the TB transmission in a scheduled slot, based on the start and the length of the TB transmission."

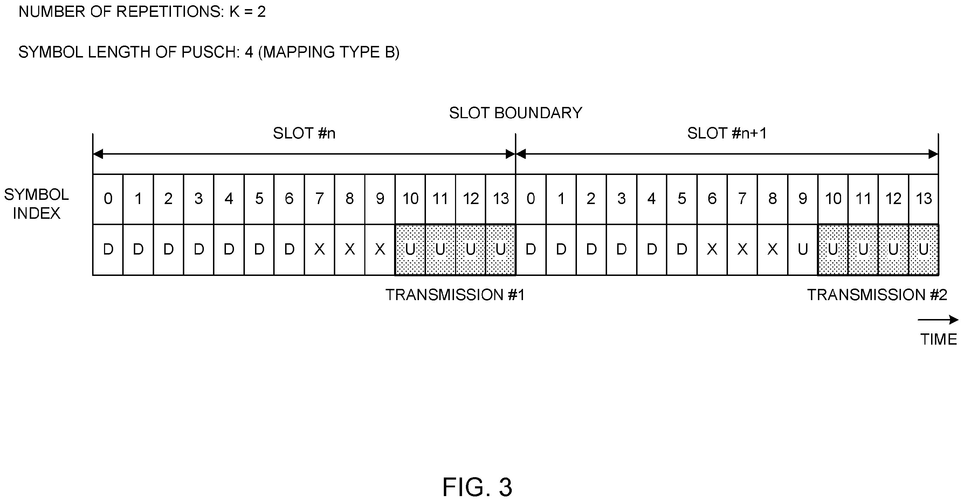

In the example in FIG. 3, the number of repetition times K is configured at 2, PUSCH mapping type B is configured, and a PUSCH starting from symbol #10 and having a length of four symbols is scheduled.

Since the scheduled PUSCH cannot be repeatedly transmitted in slot n, the UE satisfies condition 2-1-2. Hence, the UE uses the slot aggregation mechanism.

The UE maps PUSCH transmission #1 (transmission #1) to symbols #10 to #13 in slot #n. Furthermore, to follow the slot aggregation mechanism, the UE maps, in slot #n+1, PUSCH transmission #2 (transmission #2) to symbols #10 to #13 which are the same as those for the PUSCH transmission in slot #n. The NW also determines resources for repetitions similarly to the UE, and receives the repetitions.

### (Condition 2-1-3)

TB transmission is based on a dynamic grant.

According to option 2-1, the UE and/or the NW that performs TB transmission can correctly perform repetitions by using the slot aggregation mechanism when the TB transmission in data mapping type B satisfies the certain condition. The NW and/or the UE that performs TB reception can recognize repetitions using slot aggregation and hence receive TBs correctly.

### <Option 2-2>

Repetitions in data mapping type B use the mini-slot aggregation mechanism under a certain condition.

The certain condition may be to satisfy at least one of conditions 2-2-1 and 2-2-2 below.

### (Condition 2-2-1)

The length of one PUSCH (data transmission period) is seven symbols (1/2 slot) or more, and a semi-statistic DL/UL configuration allows only mini-slot aggregation between slot aggregation and mini-slot aggregation for repetitions of data scheduled in accordance with data mapping type B.

Here, a "semi-static DL/UL configuration allows only mini-slot aggregation" may be interpreted as a "case where a scheduled PUSCH can be repeatedly transmitted in a slot in a case of employing the semi-statistic DL/UL configuration" and a "case where a scheduled PUSCH can be transmitted twice or more by using UL symbols based on the semi-statistic DL/UL configuration."

Note that condition 2-2-1 may include that only slot aggregation is possible for repetitions of data scheduled in accordance with data mapping type B, or this may be defined as another condition. This condition may be interpreted as "there are sufficient symbols, after TB transmission, for repetitions of the TB transmission in a scheduled slot, based on the start and the length of the TB transmission."

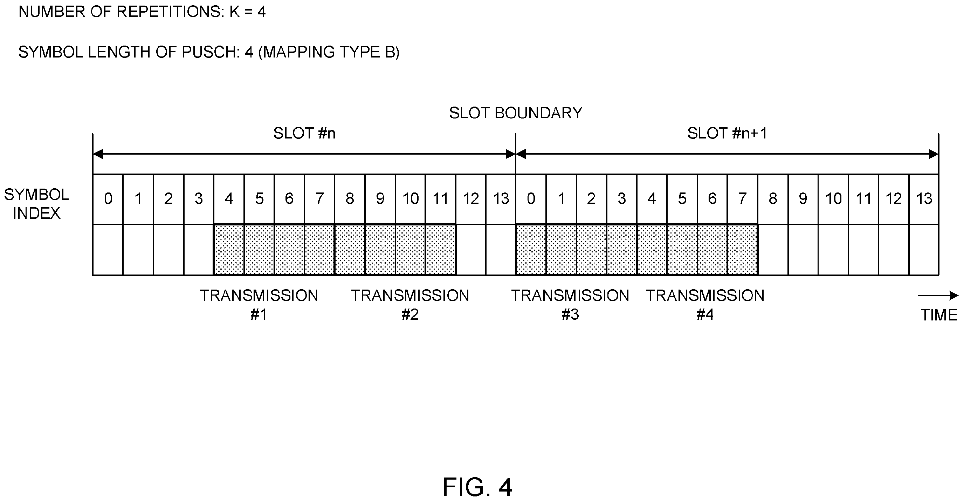

In the example in FIG. 4, the number of repetition times K is configured at 4, PUSCH mapping type B is configured, and a PUSCH starting from symbol #4 and having a length of four symbols is scheduled.

Since the scheduled PUSCH can be repeatedly transmitted in slot n, the UE satisfies condition 2-2-1. Hence, the UE uses the mini-slot aggregation mechanism.

The UE maps PUSCH transmission #1 (transmission #1) to symbols #4 to #7 in slot #n. Furthermore, to follow the mini-slot aggregation mechanism, the UE maps PUSCH transmission #2 (transmission #2) to symbols #8 to #11 subsequent to PUSCH transmission #1. Since the PUSCH transmission subsequent to PUSCH transmission #2 cannot be mapped in slot #n (otherwise, the PUSCH transmission results in crossing the slot-boundary), the UE postpones PUSCH transmission #3 (transmission #3) to next slot #n+1 to map PUSCH transmission #3 to mappable symbols #0 to #3. Furthermore, the UE maps PUSCH transmission #4 (transmission #4) to symbols #4 to #7 subsequent to PUSCH transmission #3. The NW also determines resources for repetitions similarly to the UE, and receives the repetitions.

### (Condition 2-2-2)

TB transmission is based on a configured grant.

Note that condition 2-1-3 and condition 2-2-2 may be reversed.

According to option 2-2, the UE and/or the NW that performs TB transmission can perform repetitions correctly by employing mini-slot aggregation when the TB transmission in data mapping type B satisfies the certain condition. The NW and/or the UE that performs TB reception can recognize repetitions using mini-slot aggregation and hence receive TBs correctly.

### <Option 2-3>

Repetitions of data mapping type B may use both the slot aggregation mechanism and the mini-slot aggregation mechanism under a certain condition.

The certain condition may be that the length of one data (TB) transmission period is shorter than seven symbols (1/2 slot). The certain condition may be that the length of one data transmission period is seven symbols (1/2 slot) or shorter.

When the certain condition is satisfied, following operations 2-3-1 or 2-3-2 may be performed.

### (Operation 2-3-1)

In a slot for which a semi-statistic DL/UL configuration allows mini-slot aggregation for repetitions of data scheduled in accordance with data mapping type B, the mini-slot aggregation mechanism may be used.

Here, a "slot for which a semi-static DL/UL configuration allows mini-slot aggregation" may be interpreted as a "slot in which a scheduled PUSCH can be repeatedly transmitted in the slot in a case of employing the semi-statistic DL/UL configuration" and a "slot in which a scheduled PUSCH can be transmitted twice or more by using UL symbols based on the semi-statistic DL/UL configuration."

Note that, instead of this slot, a slot for which slot aggregation is possible may be used for repetitions of data scheduled in accordance with data mapping type B. This slot may be interpreted as a "slot having sufficient symbols, after TB transmission, for repetitions of the TB transmission in a scheduled slot, based on the start and the length of the TB transmission."

### (Operation 2-3-2)

In a slot for a which semi-statistic DL/UL configuration allows slot aggregation for repetitions of data scheduled in accordance with data mapping type B, the slot aggregation mechanism may be used.

Here, a "slot for which a semi-static DL/UL configuration allows slot aggregation" may be interpreted as a "slot in which a scheduled TB transmission cannot be repeatedly performed in the slot in a case of employing the semi-statistic DL/UL configuration" and a "slot in which a scheduled TB transmission can be performed only once by using UL symbols based on the semi-statistic DL/UL configuration."

Note that, instead of this slot, a slot for which only slot aggregation is possible may be used for repetitions of data scheduled in accordance with data mapping type B. This slot may be interpreted as a "slot having no sufficient symbols, after TB transmission, for repetitions of the TB transmission in a scheduled slot, based on the start and the length of the TB transmission."

In repetitions over a plurality of slots, it may be determined, for each slot, whether to map TB transmission by using the slot aggregation mechanism or to map TB transmission by using the mini-slot aggregation mechanism. For repetitions over a plurality of slots, it may be determined whether to map TB transmission by using the slot aggregation mechanism or to map TB transmission by using the mini-slot aggregation mechanism.

Priorities of operations 2-3-1 and 2-3-2 may be configured by the NW or may be defined by a specification. For example, the UE may determine whether operation 2-3-1 is possible for a certain slot, and perform operation 2-3-1 if possible, and otherwise determine whether operation 2-3-2 is possible for the slot, and perform operation 2-3-2 if possible. For example, the UE may determine whether operation 2-3-1 is possible for K repetitions, and perform operation 2-3-1 if possible, and otherwise determine whether operation 2-3-2 is possible for the repetitions, and perform operation 2-3-2 if possible. The priorities of operations 2-3-1 and 2-3-2 may be reversed.

According to option 2-3, the UE and/or the NW that performs TB transmission can perform repetitions correctly by employing slot aggregation and/or mini-slot aggregation when the TB transmission in data mapping type B satisfies the certain condition. The NW and/or the UE that performs TB reception can recognize repetitions using slot-aggregation and/or mini-slot aggregation and hence receive TBs correctly. When repetitions cannot be performed in options 2-1 and 2-2, option 2-3 can perform repetitions in some cases and can hence perform flexible repetitions.

### (Third Aspect)

In a third aspect, mini-slot aggregation or slot aggregation is determined based on time resources for repetitions in data mapping type B.

In a case that data mapping type B is configured and a value greater than 1 is configured for K (a plurality of repetitions are configured) for data transmission, mini-slot aggregation may be performed when the time resources for the repetitions in data mapping type B satisfy a certain condition. The certain condition may be that the time resources in one slot can accommodate all the K repetitions or that the periodicity of CG transmission is up to a certain time period (or the periodicity of CG transmission is shorter than the certain time period). The certain time period may be one slot.

When the time resources for the repetitions in data mapping type B satisfy the certain condition, the UE may map all the K repetitions in one slot (mini-slot aggregation). For example, the UE may map the first repetition occasion, based on combination indication of a start symbol and length, and may map the remaining repetition occasions so as to be subsequent to the first repetition. The length of each repetition is a length based on the combination indication.

This condition for employing mini-slot aggregation (certain condition) may be combined with the condition of option 2-2 in the second aspect.

In other cases, the UE may map all the K repetitions over K consecutive slots (slot aggregation). The same symbol allocation may be applied to the repetitions in each slot. For example, the UE may map the repetitions in each slot to time resources complying with the start and length indicator value.

This condition for employing slot aggregation may be combined with the condition of option 2-1 of the second aspect.

A description will be given of an example of a case where the certain condition is that resources in one slot can accommodate all the K repetitions.

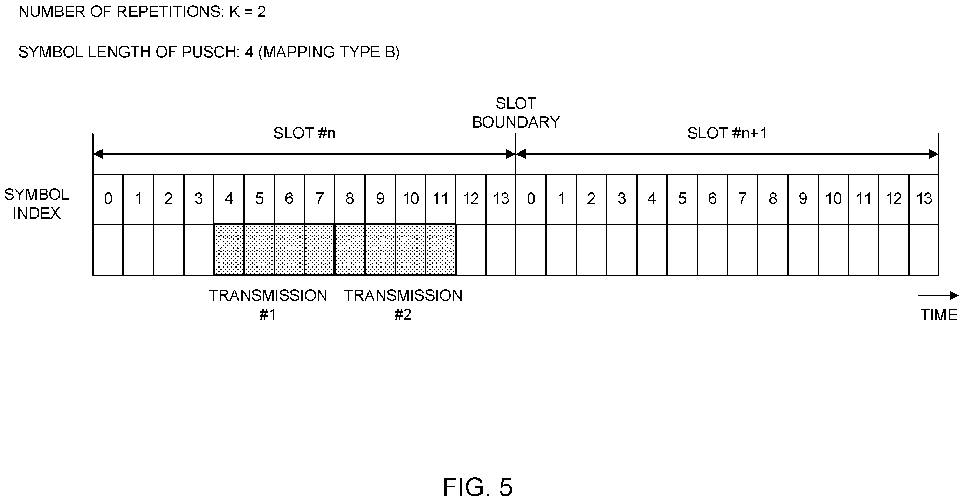

As illustrated in FIG. 5, in a case that K = 2 is configured, the starting symbol is configured at symbol #4, and the PUSCH length is configured at four symbols, two repetitions can be accommodated in one slot. Hence, the UE maps repetition #1 (transmission #1) to symbols #4 to #7 and maps repetition #2 (transmission #2) to subsequent symbols #8 to #11, in slot #n.

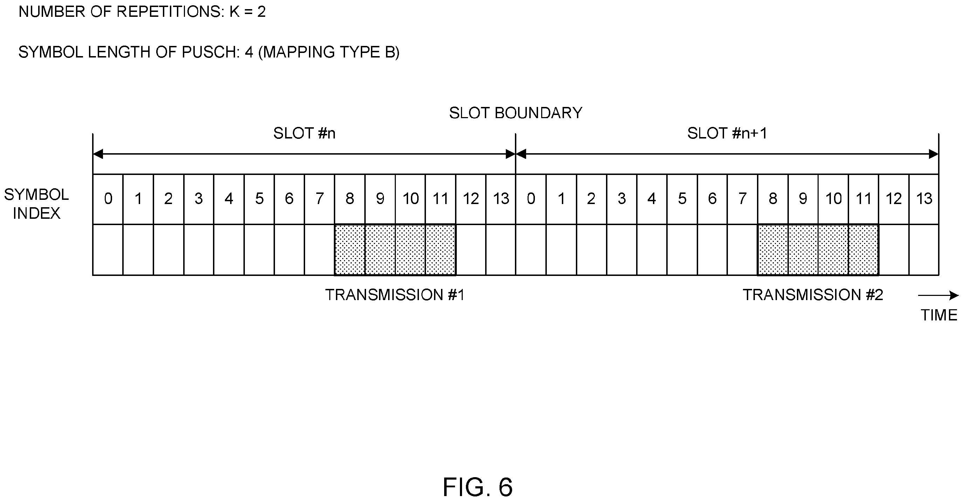

As illustrated in FIG. 6, in a case that K = 2 is configured, the starting symbol is configured at symbol #8, and the PUSCH length is configured at four symbols, two repetitions cannot be accommodated in one slot. Hence, the UE maps repetition #1 (transmission #1) to symbols #8 to #11 in slot #n and maps repetition #2 (transmission #2) to symbols #8 to #11, which are the same symbols as those for repetition #1, in slot #n+1.

Concrete examples of a case of employing to DG transmission and a case of employing to CG transmission will be described.

### <DG Transmission>

The UE may be configured with K for repetitions for a PUSCH of DG transmission by semi-statistic higher layer signaling (for example, RRC signaling).

The UE may be configured with a table for time-domain resource allocation for the PUSCH by higher layer signaling (for example, RRC signaling). Entries (rows) of the table may include a slot offset K2 indicating the number of slots from DCI to the PUSCH, a start and length indicator value (SLIV) for transmission in a slot, a mapping type used for the PUSCH transmission, and the like. In a case that transmission of the PUSCH is scheduled by DCI, a time-domain resource allocation field in the DCI may indicate an entry of the table for the UE.

In a case that K is configured at a value greater than 1 for the PUSCH of DG transmission, and the time-domain resource allocation field indicates PUSCH mapping type B, the UE may determine mini-slot aggregation or slot aggregation for time resources for repetitions in data mapping type B.

When resources in one slot can accommodate all the K repetitions, the UE may map all the K repetitions in one slot. Here, the UE may map the first repetition occasion (time resources or symbols), based on the SLIV specified by the time-domain resource allocation field and map the remaining repetitions to the symbols subsequent to the first repetition. The lengths of the repetitions are equal to each other.

In other cases, the UE may map all the K repetitions over K consecutive slots. Here, the UE may apply the same symbol allocation to the repetitions in each slot. For example, the UE may map repetitions to the same symbol positions in each of the slots in accordance with the SLIV specified by the time-domain resource allocation field.

### <CG Transmission>

CG transmission parameters may be configured by higher layer signaling (for example, RRC signaling). The CG transmission parameters may include data mapping type, K, the periodicity of CG transmission, a start and length indicator value (SLIV) for CG transmission in a slot, and the like.

In a case that the UE is configured with data mapping type B for a PUSCH of CG transmission and the UE is configured with K having a value greater than 1, the UE may determine mini-slot aggregation or slot aggregation by one of determination methods 1 and 2 below.

### <<Determination Method 1>>

When resources in one slot can accommodate all the K repetitions, the UE may map all the K repetitions in one slot. Here, the UE may map the first repetition occasion, based on a start and length indicator value (SLIV), and may map the remaining repetition occasions so as to be subsequent to the first repetition. The lengths of the repetitions are equal to each other.

In other cases, the UE may map all the K repetitions over K consecutive slots. Here, the UE may apply the same symbol allocation to the repetitions in the respective slots. For example, the UE may map the repetitions in each slot to time resources complying with the start and length indicator value (SLIV) .

The PUSCH may be limited to single transmission layer in both repetitions in one slot and repetitions over K slots.

### «Determination Method 2»

In a case that the periodicity of CG transmission is up to one slot, the UE may map the first repetition occasion, based on a start and length indicator value (SLIV), and may map the remaining repetition occasions so as to be subsequent to the first repetition. The lengths of the repetitions are equal to each other.

In other cases, the UE may map all the K repetitions over K consecutive slots. Here, the UE may apply the same symbol allocation to the repetitions in the respective slots. For example, the UE may map the repetitions to the same symbol position in each of the slots in accordance with the start and length indicator value (SLIV).

According to the third aspect, when the UE and the NW are configured with repetitions of data mapping type B, the UE and NW can appropriately select slot aggregation or mini-slot aggregation and can perform repetitions appropriately.

### (Radio Communication System)

Hereinafter, a structure of a radio communication system according to one embodiment of the present invention will be described. In this radio communication system, the radio communication method according to each embodiment of the present invention described above may be used alone or may be used in combination for communication.

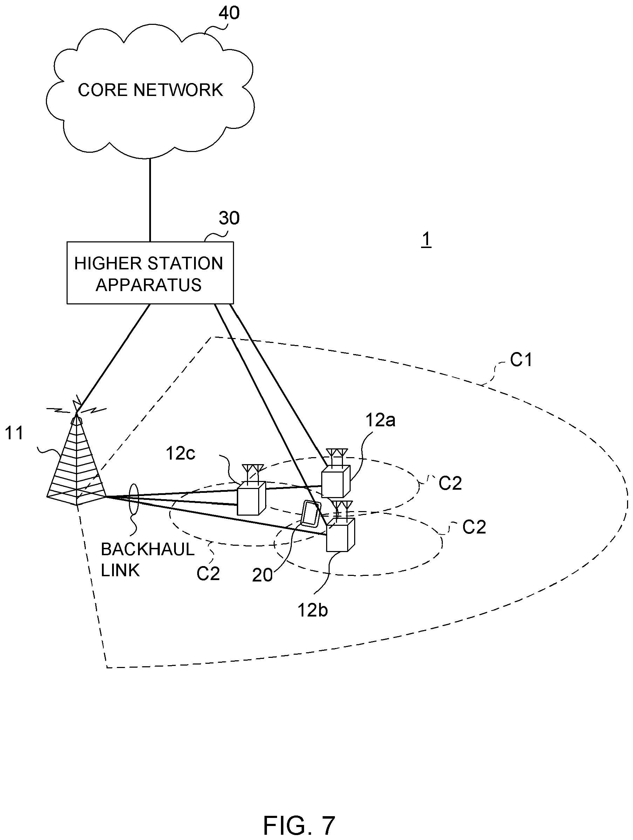

FIG. 7 is a diagram to show an example of a schematic structure of a radio communication system according to one embodiment of the present invention. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the radio base station 11 and the radio base stations 12. It is assumed that the user terminals 20 use the macro cell C1 and the small cells C2 at the same time by means of CA or DC. The user terminals 20 can execute CA or DC by using a plurality of cells (CCs) (for example, five or fewer CCs or six or more CCs).

Between the user terminals 20 and the radio base station 11, communication can be carried out by using a carrier of a relatively low frequency band (for example, 2 GHz), and a narrow bandwidth (referred to as, for example, an "existing carrier," a "legacy carrier," and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

The user terminals 20 can perform communication by using time division duplex (TDD) and/or frequency division duplex (FDD) in each cell. Furthermore, in each cell (carrier), a single numerology may be employed, or a plurality of different numerologies may be employed.

A wired connection (for example, means in compliance with the CPRI (Common Public Radio Interface) such as an optical fiber, an X2 interface, and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may include, for example, access gateway apparatus, a radio network controller (RNC), a mobility management entity (MME), and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point," and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points," and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels, and so on, are used as downlink channels. User data, higher layer control information, SIBs (System Information Blocks), and so on are communicated on the PDSCH. The MIBs (Master Information Blocks) are communicated on the PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel), and so on. Downlink control information (DCI), including PDSCH and/or PUSCH scheduling information and so on are communicated on the PDCCH.

Note that the scheduling information may be reported by the DCI. For example, the DCI scheduling DL data reception may be referred to as a "DL assignment," and the DCI scheduling UL data transmission may be referred to as a "UL grant."

The number of OFDM symbols to use for the PDCCH is communicated on the PCFICH. Transmission confirmation information (for example, also referred to as "retransmission control information," "HARQ-ACK," "ACK/NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)), and so on are used as uplink channels. User data, higher layer control information, and so on are communicated on the PUSCH. In addition, radio quality information (CQI (Channel Quality Indicator)) of the downlink, transmission confirmation information, scheduling request (SR), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### (Radio Base Station)

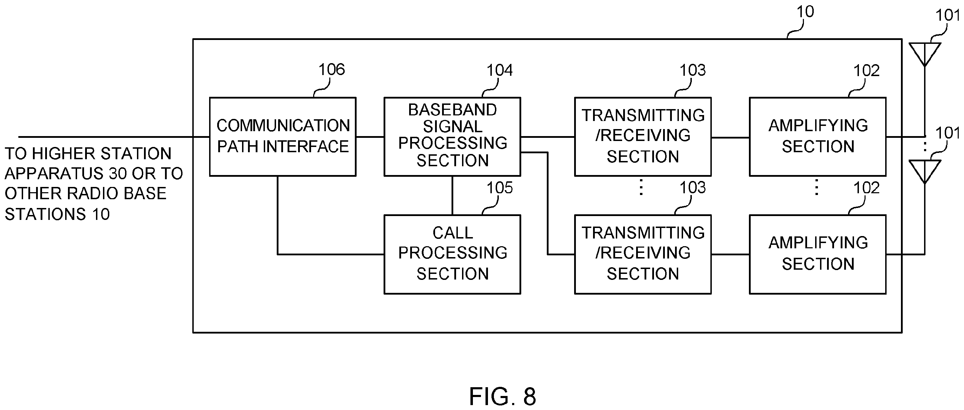

FIG. 8 is a diagram to show an example of an overall structure of a radio base station according to one embodiment of the present invention. A radio base station 10 includes a plurality of transmitting/receiving antennas 101, amplifying sections 102, transmitting/receiving sections 103, a baseband signal processing section 104, a call processing section 105, and a communication path interface 106. Note that the radio base station 10 may be configured to include one or more transmitting/receiving antennas 101, one or more amplifying sections 102, and one or more transmitting/receiving sections 103.

User data to be transmitted from the radio base station 10 to the user terminal 20 by the downlink is input from the higher station apparatus 30 to the baseband signal processing section 104, via the communication path interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (setting up, releasing, and so on) for communication channels, manages the state of the radio base station 10, manages the radio resources, and so on.

The communication path interface 106 transmits and/or receives signals to and/or from the higher station apparatus 30 via a certain interface. The communication path interface 106 may transmit and/or receive signals (backhaul signaling) with other radio base stations 10 via an inter-base station interface (for example, an optical fiber in compliance with the CPRI (Common Public Radio Interface) and an X2 interface).

The transmitting/receiving sections 103 may repeatedly perform transmission of a physical shared channel (for example, a PDSCH) in a period over at least one slot. The transmitting/receiving sections 103 may transmit a physical shared channel for which data mapping type B and a plurality of repetitions are configured.

The transmitting/receiving sections 103 may receive a physical shared channel (for example, a PUSCH) repeatedly transmitted, in a period over at least one slot. The transmitting/receiving sections 103 may receive a physical shared channel for which data mapping type B and a plurality of repetitions are configured.

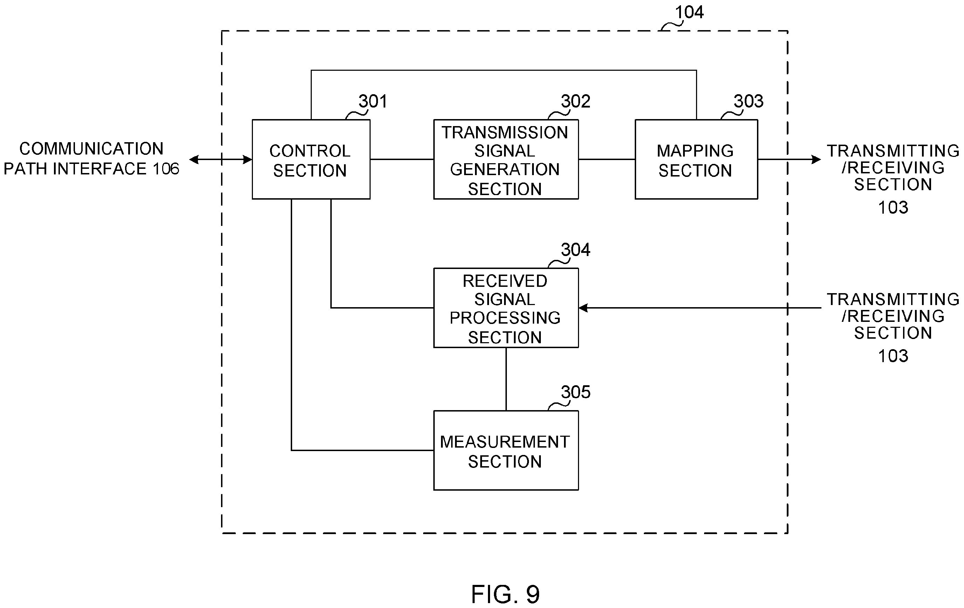

FIG. 9 is a diagram to show an example of a functional structure of the radio base station according to one embodiment of the present invention. Note that, the present example primarily shows functional blocks that pertain to characteristic parts of the present embodiment, and it is assumed that the radio base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can be constituted with a controller, a control circuit, or control apparatus that can be described based on general understanding of the technical field to which the present invention pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource allocation) of system information, a downlink data signal (for example, a signal transmitted on the PDSCH), a downlink control signal (for example, a signal transmitted on the PDCCH and/or the EPDCCH, such as transmission confirmation information). Based on the results of determining necessity or not of retransmission control to the uplink data signal, or the like, the control section 301 controls generation of a downlink control signal, a downlink data signal, and so on. The control section 301 controls the scheduling of a synchronization signal (for example, PSS (Primary Synchronization Signal)/SSS (Secondary Synchronization Signal)), a downlink reference signal (for example, CRS, CSI-RS, DMRS), and so on.

The control section 301 controls the scheduling of an uplink data signal (for example, a signal transmitted on the PUSCH), an uplink control signal (for example, a signal transmitted on the PUCCH and/or the PUSCH, such as transmission confirmation information), a random access preamble (for example, a signal transmitted on the PRACH), an uplink reference signal, and so on.

The control section 301 may determine whether to perform a plurality of transmissions of a physical shared channel in each slot (for example, mini-slot aggregation), based on the mapping type of the physical shared channel (for example, the PDSCH).

The control section 301 may be configured with one of mapping type A, in which the starting symbol of a physical shared channel is limited to at least one symbol at the beginning of a slot, and mapping type B, in which the starting symbol of a physical shared channel is not limited.

The control section 301 may determine whether to perform a plurality of transmissions of a physical shared channel in each slot, based on at least one of the mapping type of the physical shared channel, a transmission direction (for example, a DL/UL configuration) configured for each symbol in a slot, and the starting symbol and the length configured for the physical shared channel.

In a case of performing one transmission of a physical shared channel in one slot (for example, slot aggregation), each transmission is performed using the symbols the same as those for the physical shared channel in the immediately previous slot. In a case of performing a plurality of transmissions of a physical shared channel in one slot (for example, mini-slot aggregation), the plurality of transmissions may be consecutive.

The control section 301 may determine whether to perform a plurality of transmissions of a physical shared channel in each slot, based on the mapping type of the physical shared channel (for example, the PUSCH).

The control section 301 may control execution of the plurality of repetitions in one slot, when time resources of the physical shared channel (for example, the PDSCH) satisfy a certain condition.

The certain condition may be that the plurality of repetitions are accommodated within one slot.

The certain condition may be that a periodicity of the physical shared channel based on a configured grant is up to one slot.

The control section 301 may map, in a case that the time resources of the physical shared channel satisfy the certain condition, the plurality of repetitions to consecutive symbols from a starting symbol configured for the physical shared channel.

The control section 301 may map, in a case that the time resources of the physical shared channel do not satisfy the certain condition, one repetition to consecutive symbols from a starting symbol configured for the physical shared channel, in each of consecutive slots the number of which is equal to the number of repetition times.

The control section 301 may control reception of the plurality of repetitions in one slot, when time resources of the physical shared channel (for example, the PUSCH) satisfy a certain condition.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit, or signal generation apparatus that can be described based on general understanding of the technical field to which the present invention pertains.

For example, the transmission signal generation section 302 generates DL assignment to report assignment information of downlink data and/or UL grant to report assignment information of uplink data, based on commands from the control section 301. The DL assignment and the UL grant are both DCI, and follow the DCI format. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to certain radio resources, based on commands from the control section 301, and outputs these to the transmitting/receiving sections 103. The mapping section 303 can be constituted with a mapper, a mapping circuit, or mapping apparatus that can be described based on general understanding of the technical field to which the present invention pertains.

The received signal processing section 304 performs receiving processes (for example, demapping, demodulation, decoding, and so on) of received signals that are input from the transmitting/receiving sections 103. Here, the received signals are, for example, uplink signals that are transmitted from the user terminals 20 (uplink control signals, uplink data signals, uplink reference signals, and so on). The received signal processing section 304 can be constituted with a signal processor, a signal processing circuit, or signal processing apparatus that can be described based on general understanding of the technical field to which the present invention pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit, or measurement apparatus that can be described based on general understanding of the technical field to which the present invention pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), a received quality (for example, RSRQ (Reference Signal Received Quality), an SINR (Signal to Interference plus Noise Ratio), an SNR (Signal to Noise Ratio)), a signal strength (for example, RSSI (Received Signal Strength Indicator)), channel information (for example, CSI), and so on. The measurement results may be output to the control section 301.

### (User Terminal)

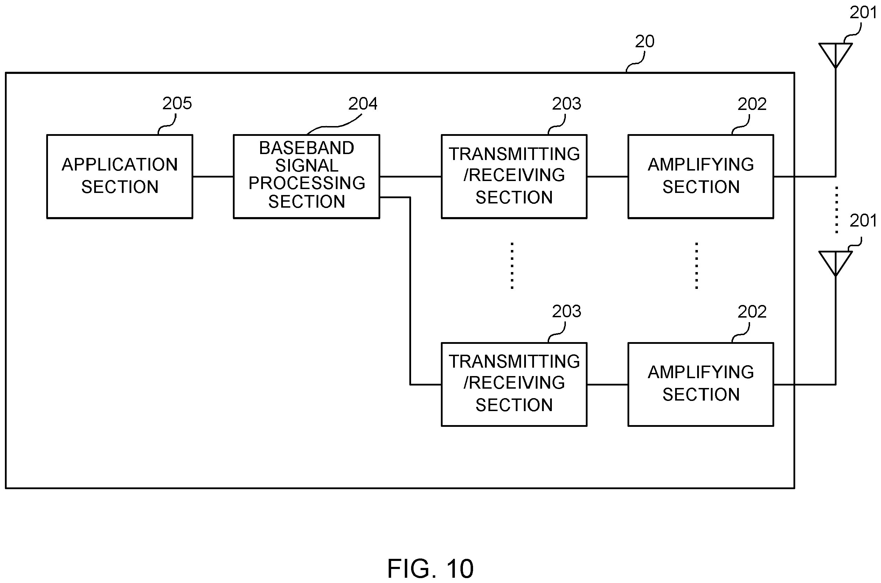

FIG. 10 is a diagram to show an example of an overall structure of a user terminal according to one embodiment of the present invention. A user terminal 20 includes a plurality of transmitting/receiving antennas 201, amplifying sections 202, transmitting/receiving sections 203, a baseband signal processing section 204, and an application section 205. Note that the user terminal 20 may be configured to include one or more transmitting/receiving antennas 201, one or more amplifying sections 202, and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits, or transmitting/receiving apparatus that can be described based on general understanding of the technical field to which the present invention pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process, and so on, and the result is forwarded to the transmitting/receiving section 203. The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 may repeatedly perform transmission of a physical shared channel (for example, a PUSCH) in a period over at least one slot. The transmitting/receiving sections 203 may transmit a physical shared channel for which data mapping type B and a plurality of repetitions are configured.

The transmitting/receiving sections 203 may receive a physical shared channel (for example, a PDSCH) repeatedly transmitted, in a period over at least one slot. The transmitting/receiving sections 203 may receive a physical shared channel for which data mapping type B and a plurality of repetitions are configured.

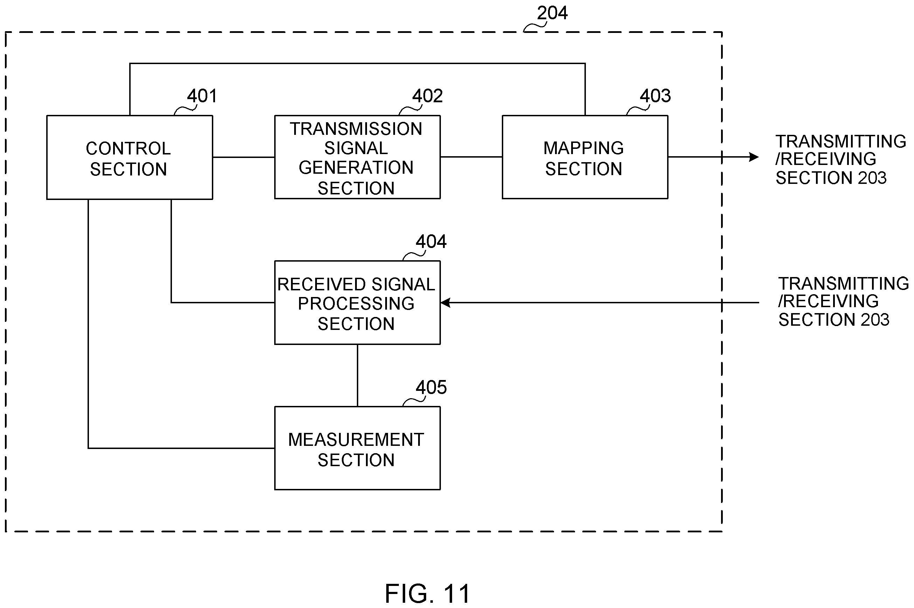

FIG. 11 is a diagram to show an example of a functional structure of the user terminal according to one embodiment of the present invention. Note that, the present example primarily shows functional blocks that pertain to characteristic parts of the present embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404, and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit, or control apparatus that can be described based on general understanding of the technical field to which the present invention pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the radio base station 10, from the received signal processing section 404. The control section 401 controls generation of an uplink control signal and/or an uplink data signal, based on the results of determining necessity or not of retransmission control to a downlink control signal and/or a downlink data signal.

The control section 401 may determine whether to perform a plurality of transmissions of a physical shared channel in each slot (for example, mini-slot aggregation), based on the mapping type of the physical shared channel (for example, the PUSCH).

The control section 401 may be configured with one of mapping type A, in which the starting symbol of a physical shared channel is limited to at least one symbol at the beginning of a slot, and mapping type B, in which the starting symbol of a physical shared channel is not limited.

The control section 401 may determine whether to perform a plurality of transmissions of a physical shared channel in each slot, based on at least one of the mapping type of the physical shared channel, a transmission direction (for example, a DL/UL configuration) configured for each symbol in a slot, and the starting symbol and the length configured for the physical shared channel.

In a case of performing one transmission of a physical shared channel in one slot (for example, slot aggregation), each transmission is performed using the symbols the same as those for the physical shared channel in the immediately previous slot. In a case of performing a plurality of transmissions of a physical shared channel in one slot (for example, mini-slot aggregation), the plurality of transmissions may be consecutive.

The control section 401 may determine whether to perform a plurality of transmissions of a physical shared channel in each slot, based on the mapping type of the physical shared channel (for example, the PDSCH).

The control section 401 may control execution of the plurality of repetitions in one slot, when the time resources of the physical shared channel (for example, the PUSCH) satisfy a certain condition.

The certain condition may be that the plurality of repetitions are accommodated within one slot.

The certain condition may be that a periodicity of the physical shared channel based on a configured grant is up to one slot.

The control section 401 may map, in a case that the time resources of the physical shared channel satisfy the certain condition, the plurality of repetitions to consecutive symbols from a starting symbol configured for the physical shared channel.

The control section 401 may map, in a case that the time resources of the physical shared channel do not satisfy the certain condition, one repetition to consecutive symbols from a starting symbol configured for the physical shared channel, in each of consecutive slots the number of which is equal to the number of repetition times.

The control section 401 may control reception of the plurality of repetitions in one slot, when time resources of the physical shared channel (for example, the PDSCH) satisfy a certain condition.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit, or signal generation apparatus that can be described based on general understanding of the technical field to which the present invention pertains.

For example, the transmission signal generation section 402 generates an uplink control signal about transmission confirmation information, the channel state information (CSI), and so on, based on commands from the control section 401. The transmission signal generation section 402 generates uplink data signals, based on commands from the control section 401. For example, when a UL grant is included in a downlink control signal that is reported from the radio base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit, or mapping apparatus that can be described based on general understanding of the technical field to which the present invention pertains.

The received signal processing section 404 performs receiving processes (for example, demapping, demodulation, decoding, and so on) of received signals that are input from the transmitting/receiving sections 203. Here, the received signals are, for example, downlink signals transmitted from the radio base station 10 (downlink control signals, downlink data signals, downlink reference signals, and so on). The received signal processing section 404 can be constituted with a signal processor, a signal processing circuit, or signal processing apparatus that can be described based on general understanding of the technical field to which the present invention pertains. The received signal processing section 404 can constitute the receiving section according to the present invention.

The received signal processing section 404 outputs the decoded information acquired through the receiving processes to the control section 401. The received signal processing section 404 outputs, for example, broadcast information, system information, RRC signaling, DCI, and so on, to the control section 401. The received signal processing section 404 outputs the received signals and/or the signals after the receiving processes to the measurement section 405.

The measurement section 405 conducts measurements with respect to the received signals. The measurement section 405 can be constituted with a measurer, a measurement circuit, or measurement apparatus that can be described based on general understanding of the technical field to which the present invention pertains.

For example, the measurement section 405 may perform RRM measurement, CSI measurement, and so on, based on the received signal. The measurement section 405 may measure a received power (for example, RSRP), a received quality (for example, RSRQ, SINR, SNR), a signal strength (for example, RSSI), channel information (for example, CSI), and so on. The measurement results may be output to the control section 401.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus.

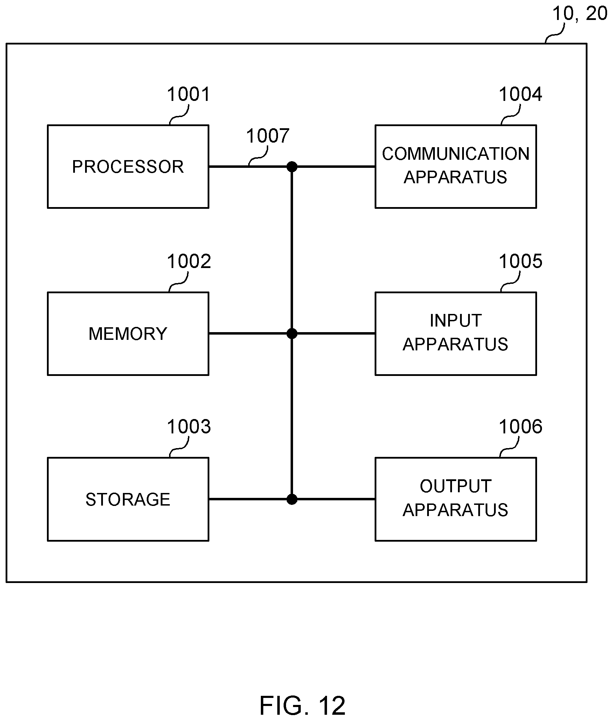

For example, a radio base station, a user terminal, and so on according to one embodiment of the present disclosure may function as a computer that executes the processes of the radio communication method of the present disclosure. FIG. 12 is a diagram to show an example of a hardware structure of the radio base station and the user terminal according to one embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)," and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, at least one of "channels" and/or "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency," and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols fewer than those of a slot. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "transmission time interval (TTI)," a plurality of consecutive subframes may be referred to as a "TTI" or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "common TTI" (TTI in LTE Rel. 8 to Rel. 12), a "normal TTI", a "long TTI," a "common subframe," a "normal subframe," a "long subframe," and so on. A TTI that is shorter than a common TTI may be referred to as a "shortened TTI," a "short TTI," a "partial or fractional TTI," a "shortened subframe," a "short subframe," a "mini-slot," a "sub-slot," and so on.

Note that a "long TTI" (for example, a common TTI, a subframe, and so on) may be interpreted as a "TTI having a time length exceeding 1 ms," and a "short TTI" (for example, a shortened TTI and so on) may be interpreted as a "TTI having a TTI length shorter than the TTI length of a long TTI and equal to or longer than 1 ms."

A resource block (RB) is the unit of resource allocation in the time domain and the frequency domain, and may include one or a plurality of consecutive subcarriers in the frequency domain.

Also, an RB may include one or a plurality of symbols in the time domain, and may be one slot, one mini-slot, one subframe, or one TTI in length. One TTI and one subframe each may be constituted of one or a plurality of resource blocks.

Note that one or a plurality of RBs may be referred to as a "physical resource block (PRB (Physical RB))," a "sub-carrier group (SCG)," a "resource element group (REG)," a "PRB pair," an "RB pair," and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. For example, since various channels (PUCCH (Physical Uplink Control Channel), PDCCH (Physical Downlink Control Channel), and so on) and information elements can be identified by any suitable names, the various names assigned to these individual channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure are used interchangeably.

In the present disclosure, the terms such as a "base station (BS)," a "radio base station," a "fixed station," a "NodeB," an "eNodeB (eNB)," a "gNodeB (gNB)," an "access point," a "transmission point," a "reception point," a "transmission/reception point," a "cell," a "sector," a "cell group," a "carrier," a "component carrier," a "bandwidth part (BWP),"and so on can be used interchangeably. The base station may be referred to as the terms such as a "macro cell," a small cell," a "femto cell," a "pico cell," and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," and so on. Note that at least one of a base station and a mobile station may be a device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation.

Furthermore, the "radio base station" in the present disclosure may be interpreted as a "user terminal." For example, each aspect/embodiment of the present disclosure may be applied to the structure that replaces a communication between a radio base station and a user terminal with a communication between a plurality of user terminals (for example, which may be referred to as "D2D (Device-to-Device)," "V2X (Vehicle-to-Everything)," and the like). In this case, the user terminals 20 may have the functions of the radio base stations 10 described above. The words "uplink" and "downlink" may be interpreted as the words corresponding to the terminal-to-terminal communication (for example, "side"). For example, an "uplink channel," a "downlink channel," and so on may be interpreted as a "side channel."

Likewise, the "user terminal" in the present disclosure may be interpreted as a "radio base station." In this case, the radio base stations 10 may have the functions of the user terminals 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables, printed electrical connections, and the like, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." The terms "separate," "be coupled," and so on may be interpreted similarly.

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the gist and scope of the invention defined by the recitations of claims. Consequently, the description of the present disclosure is provided only for the purpose of explaining examples, and should by no means be construed to limit the invention according to the present disclosure in any way.

## Claims

1. A transmitting apparatus comprising:
a transmitting section that transmits a physical shared channel for which data mapping type B and a plurality of repetitions are configured; and
a control section that performs control to perform the plurality of repetitions in one slot in a case that a time resource of the physical shared channel satisfies a certain condition.

2. The transmitting apparatus according to claim 1, wherein
the certain condition is that the plurality of repetitions are accommodated within one slot.

3. The transmitting apparatus according to claim 1, wherein
the certain condition is that a periodicity of the physical shared channel based on a configured grant is up to one slot.

4. The transmitting apparatus according to any one of claims 1 to 3, wherein
the control section maps the plurality of repetitions to consecutive symbols from a starting symbol configured for the physical shared channel, in a case that the time resource of the physical shared channel satisfies the certain condition.

5. The transmitting apparatus according to any one of claims 1 to 4, wherein
in a case that the time resource of the physical shared channel does not satisfy the certain condition, the control section maps in each of consecutive slots the number of which is equal to the number of repetition times, one repetition to consecutive symbols from a starting symbol configured for the physical shared channel.

6. A receiving apparatus comprising:
a receiving section that receives a physical shared channel for which data mapping type B and a plurality of repetitions are configured; and
a control section that performs control of reception of the plurality of repetitions in one slot in a case that a time resource of the physical shared channel satisfies a certain condition.
